# EUROPEAN PATENT SPECIFICATION

(11) **EP 2 213 178 B1**
(45) Date of publication and mention of the grant of the patent: **21.11.2012**
(21) Application number: 09380012.6
(22) Date of filing: 28.01.2009
(51) Int. Cl.: F26B 15/10, A23L 1/317, A23B 4/03

(54) **Forced convection treatment unit for a meat product cut into slices and method of treatment of a meat product using said unit**
Zwangskonvektionsgerät zur Behandlung von geschnittenen Fleischscheiben und ein solches Gerät benutzendes Behandlungsverfahren
Unité de traitement de convection forcée pour un produit carnée coupé en tranches et méthode de traitement d'un produit carnée utilisant ladite unité

(43) Date of publication of application: 04.08.2010
(73) Proprietor: Metalquimia, SA, 17007 Girona (ES)
(72) Inventor: Lagares Corominas, Narcis, 17007 Girona (ES)
(74) Representative: Gislon, Gabriele

(56) References cited:
- WO-A-2008/135616
- DE-A1- 10 221 254
- FR-A- 2 787 179
- MX-A- PA00 001 245
- US-A- 4 961 373

## Description

### Technical Field

The present invention relates to a forced convection treatment unit which can be used for treating a meat product cut into slices by subjecting it to two conditioned air currents in opposite directions. The present invention also relates to a process for preparing a meat product, more particularly a sausage meat product cut into slices, using said forced convection treatment unit.

### Background of the Invention

A number of traditional processes for preparing matured or cured meat products, especially sausage meat products, which can be preserved for longer or shorter time periods depending on their degree of curing, are well known. Such processes generally comprise preparing a mass with one or more comminuted meat products, optionally with one or more condiments, and stuffing said mass in a casing to form sausage products. The mass is allowed to ferment by hanging the sausage products in a fermentation chamber at a controlled temperature depending on each type of sausage product and for a predetermined time period which can vary from 1 to several days. In some varieties, the sausage products can be smoked during or after the fermentation. Finally, the sausage products are hung and allowed to dry for a time period sufficient to achieve a predetermined moisture reduction in the product, and this drying period can be prolonged from 10 days, for the tenderest products, up to several months for the most cured sausage products. The food industry has proposed for a long time a number of apparatuses and processes to reduce the drying time of sausage products.

Patent US-A-2346232, from the year 1942, describes a process for rapidly preparing a dried meat product, comprising comminuting meat with a natural water content of 45% to 85% at a temperature below the softening point of the fatty portions contained in the meat, placing the meat once thus comminuted in a relatively thin layer, and forcing an air current against the surface of the meat at a sufficiently high speed to cause turbulence of the air, until the moisture content of the meat has been reduced by 20% to 55%. The forced air is at a temperature of 0°C to 30°C, and has a relative humidity less than 75%.

Patent MX PA00001245 A describes a process for preparing sausage products comprising preparing a mixture of meat for sausage products, spreading the mixture in the form of a sheet, and fermenting and cooking the resulting product. Then, the product is cut into slices after having cooled it to a sufficiently low temperature, the slices are deposited in a conveyor of a spiral dryer, and conditioned air with a relative humidity less than 50% and at a temperature between 10°C and 50°C is made to pass inside and through the spiral dryer while the product in slices is conveyed through the spiral dryer for sufficient time to reduce the moisture to a predetermined level. The mentioned spiral dryer has a construction similar to a cooking oven described in patent ES-A-2077217 T3, which can operate with steam or with hot air. The oven comprises a conveyor provided with a permeable support surface on which the food products are deposited, and which describes an upward spiral path inside a cooking chamber, and ventilating means for circulating the steam or the hot air from top to bottom and around the food products located in the conveyor inside the cooking chamber.

Patent JP-A-2069135 describes a dryer with a wire mesh belt conveyor having several superimposed sections moving in alternately opposite directions, where the material to be dried is cut into slices, introduced into the dryer, and arranged first on an upper conveyor section, it is then successively passed, falling from one to another, from the end of each section to the start of the immediately lower section, until finally reaching the lowest conveyor section, from the end of which the product is extracted from the dryer. While they are conveyed in the upper sections, the slices of product are irradiated with infrared rays from distant infrared heaters, while at the same time ventilating means make hot air pass in countercurrent in relation to the direction of travel of the upper conveyor sections. In the lower conveyor sections, other ventilating means make hot air pass in a direction perpendicular to the surfaces of the lower conveyor sections.

Patent GB-A-1402652 discloses an apparatus for steaming a food product, comprising a housing defining a steaming chamber having an inlet close to the bottom and an outlet close to the upper part of said housing, and means for automatically opening and closing said inlet and outlet when trays carrying the food product are conveyed into and out from the housing. Inside the housing there is a loading conveyor for receiving the trays entering through the inlet, a conveyor for unloading the trays through the outlet and a conveyor for vertically conveying the trays between the loading conveyor and the unloading conveyor. The vertical conveyor comprises a pair of chain conveyors arranged on opposite sides of the chamber and equipped with a plurality of L-shaped bars linked to the chains and sized to support the trays. The steam is introduced from the lower part of the treatment chamber, below the loading conveyor.

International patent application WO 2008135616 discloses an installation for drying and maturing a food product cut into slices, suitable for preparing sausage products with a relatively high curing cut into slices. To that end, the installation includes first a forced convection treatment unit and then a vacuum treatment unit. The mentioned forced convection treatment unit comprises a conveyor device arranged to convey slices or pieces of the product to be treated inside an enclosure through which there a current of hot air is established in a direction parallel to the plane of the conveyor and transverse to the direction of travel thereof. The conveyor device has several superimposed horizontal sections actuated to move in alternately opposite directions and arranged such that the slices successively pass from one section to the immediately lower section. A hot air inlet mouth connected to an inlet conduit is arranged on one side of the enclosure and a hot air outlet mouth connected to an outlet conduit is arranged on the opposite side of the enclosure. The inlet and outlet conduits are connected to one another through an air heating unit, and air circulation means are arranged to circulate the hot air through said inlet and outlet conduits for the purpose of creating the mentioned current of hot air through the enclosure.

The mentioned current of hot air through the enclosure in a direction parallel to the plane of the conveyor and transverse to the direction of travel thereof has proven to be effective for achieving the treatment of the desired food product. However, the fact that the air current flows in a single direction has the drawback of an irregular drying of the slices, since the slices close to the side corresponding to the hot air inlet mouth are dried more than the slices close to the side corresponding to the outlet mouth.

In addition, it has been found that for preparing certain relatively tender sausage products, i.e., with a low degree of curing, a process for treating the product cut into slices similar to that which can be implemented by means of the installation described in the mentioned international patent application WO 2008135616 can be used, but using only the forced convection treatment unit and omitting the mentioned vacuum treatment unit.

### Disclosure of the Invention

According to a first aspect, the present invention provides a forced convection treatment unit for treating a meat product cut into slices (previously suitably cooled) according to claim 1, of the type comprising a conveyor device configured to convey slices of said meat product arranged in a single layer on a permeable support surface along a path inside an enclosure, and an air circulation device configured and arranged to make conditioned air pass through the inside of said enclosure and around said slices while the slices are conveyed by said conveyor device for sufficient time to reduce the moisture of the slices to a predetermined level. The air circulation device comprises at least one air moving device, such as a ventilator device, associated to an arrangement of conduits provided with a plurality of inlet and outlet mouths in communication with the inside of the enclosure and arranged to make at least first and second mutually parallel conditioned air currents, in opposite directions parallel to said permeable support surface and transverse to the direction of travel of the conveyor device, pass through two respective regions of the enclosure.

Thus, with the forced convection treatment unit of the present invention, the slices which are conveyed by the conveyor device receive a first conditioned air current from a first side of the enclosure during a first portion of the path through the inside of the enclosure and a second conditioned air current from an opposite second side of the enclosure during a second portion of the path through the inside of the enclosure, with the result of a better uniformity in the drying of the slices in the entire width of the surface of the conveyor. It will be understood that, depending on the length of the path of the conveyor, the unit can include a number of inlet and outlet mouths to provide more than two parallel currents in alternately opposite directions.

The enclosure preferably has first and second opposite sides between which the path of the conveyor device runs, and the unit comprises a pair of facing first inlet and outlet mouths located respectively on said first side and on said second side of the enclosure and a pair of facing second inlet and outlet mouths located, in this case, respectively on the second side and on the first side of the enclosure. Said first conditioned air current is thus introduced into the enclosure through the first inlet mouth and is extracted through the first outlet mouth and said second conditioned air current is introduced into the enclosure through the second inlet mouth and is extracted through the second outlet mouth. The passage areas of all the inlet and outlet mouths can have substantially the same dimensions. In an embodiment, the first inlet mouth and the second outlet mouth are mutually adjacent on the first side of the enclosure, and the first outlet mouth and the second inlet mouth are mutually adjacent on the second side of the enclosure. There is no separation inside the enclosure, and the two currents have bordering areas in contact. One or more of the first and second inlet and outlet mouths are preferably equipped with a plurality of directing flanges in the form of separate superimposed sheets, parallel to the direction of the corresponding current, to aid in directing the conditioned air current passing therethrough.

According to an embodiment, the mentioned arrangement of conduits of the air circulation device comprises a pair of first inlet and outlet conduits connected respectively to the first inlet mouth and to the first outlet mouth, and a pair of second inlet and outlet conduits connected respectively to the second inlet mouth and to the second outlet mouth. This involves a double conditioned air circuit, each one with an air conditioning unit and at least one ventilator device to drive or suck the conditioned air.

According to another embodiment, the arrangement of conduits comprises an inlet conduit connected to the first inlet mouth, a deflector conduit connected at a first end to the first outlet mouth and at a second end to the second inlet mouth, and an outlet conduit connected to the second outlet mouth. With this arrangement, the air forming the first conditioned air current when it leaves the enclosure passes through the deflector conduit and then re-enters it to form the second air current, which involves a single conditioned air circuit with only one air conditioning unit and at least one ventilator device either in the inlet conduit to drive the conditioned air through the first inlet mouth or in the outlet conduit to suck the conditioned air through the second outlet mouth. Optionally, an additional ventilator device can be arranged in the deflector conduit to suck conditioned air through the first outlet mouth and at the same time drive conditioned air through the second inlet mouth.

The conveyor device can be of several types, for example a conveyor device provided with several superimposed sections such as that described in the mentioned international patent application WO 2008135616, where each conveyor section comprises at least one endless belt providing the mentioned permeable support surface on which the slices of meat product are directly arranged. Alternatively, each conveyor section can be configured to horizontally move a plurality of trays, each of which is provided with a permeable support surface on which the slices are arranged. With the use of this conveyor device provided with several superimposed sections, the pair of first conditioned air inlet and outlet mouths and the pair of second conditioned air inlet and outlet mouths can be located in the enclosure either side to side or one on top of the other, since the slices are conveyed into the enclosure both in a vertical direction and in alternately opposite horizontal directions.

According to a preferred embodiment, the conveyor device is configured to convey a plurality of trays, each of which is provided with a horizontal permeable support surface on which the slices are arranged in a single layer, and to vertically move said trays within the enclosure in a vertical direction from a reception level to a delivery level. In this case, the pair of first conditioned air inlet and outlet mouths are sized and arranged in the enclosure to make the first conditioned air current pass through a half of the vertical path of the trays between said reception level and said delivery level, and the pair of second conditioned air inlet and outlet mouths are sized and arranged to make the second conditioned air current pass through another half of the vertical path of the trays between said reception level and said delivery level. The enclosure has a tray reception opening located in the mentioned reception level and a tray delivery opening located in said delivery level. The conveyor device comprises outside the enclosure a loading conveyor for receiving trays and introducing them through said reception opening, and inside the enclosure an unloading conveyor for unloading trays through said delivery opening, and a vertical conveyor for vertically conveying the trays between the loading conveyor and the unloading conveyor. The vertical conveyor can be a chain conveyor similar to that described in the mentioned patent GB-A-1402652.

In this embodiment, the reception level can be close to the bottom and the delivery level close to the upper part of the enclosure, such that the path of the trays within the enclosure is a bottom to top upward path, or vice versa, such that the path of the trays within the enclosure is a top to bottom downward path. Whichever the upward or downward path of the trays inside the enclosure, the pairs of first and second inlet and outlet mouths can be arranged to make the first air current pass through the upper half and the second air current pass through the lower half of the vertical path of the trays inside the enclosure, or vice versa. According to an embodiment, the unit is built such that the vertical path of the trays inside the enclosure can be changed from upward to downward by simply reversing the operation of the actuations of the conveyor device, such that a forced convection treatment line can be built formed by two or more of such units which are linked and reversely actuated, such that, for example, the trays unloaded through the delivery opening located in the upper level of one unit are immediately loaded through the reception opening located in the upper level of the following unit, and the trays unloaded through the delivery opening located in the lower level of one unit are immediately loaded through the reception opening located in the lower level of the following unit.

According to a second aspect, the present invention provides a process for preparing a meat product according to claim 10, more specifically a relatively tender sausage meat product, i.e., with a low level of curing, such as a salami or the like, cut into slices. The first part of the process is conventional and comprises the following steps. In the first place, a mass is prepared with one or more comminuted meat products, which can include, for example, lean meat of pork and/or veal and pork fat or lard, optionally with one or more condiments, and said mass is stuffed in a casing, such as an intestine, which can be of cellulose or collagen, to form sausage products. As a merely guiding information, the most usual calibres for the intestine range between 60 and 120, although higher and lower calibres are possible, and the meat products are comminuted to a particle size of 2 to 3 mm. A stoving process is then carried out in which the mass is allowed to ferment in the sausage products, for example by hanging the sausage products in a fermentation chamber at a temperature of 15°C to 30°C for a period of 12 hours to 3 days, for the purpose of achieving a rapid growth of microorganisms causing a reduction in the pH of the mass and a consequent coagulation of the meat proteins which will give consistency to the sausage product. The sausage products can optionally be smoked during the mentioned stoving process or at the end thereof. If the mass has sugar as an added ingredient, an attempt is generally made for the microorganisms to consume all the added sugar, such that once the mentioned stoving process has finished the pH remains constant during a subsequent drying process. This stoving process generally causes a reduction of 3% to 5% by weight of the sausage products. Finally, the sausage products are dried until achieving a predetermined weight reduction, which for relatively tender sausage products may be of 8% to 35% with respect to the weight of the fermented sausage products, i.e., at the end of the stoving process.

In a traditional process, the drying process is carried out by leaving the sausage products hanging in a maturing room for a time period which, for these relatively tender sausage products, can range between 10 and 20 days. The conditions in the maturing chamber can be a temperature of 12°C to 15°C and a relative humidity of 70% to 75%, or the environmental conditions in a suitable climate. However, processes are known which allow significantly reducing the time required for the drying process by first cooling the sausage products obtained after the stoving process to a sufficient low temperature to allow them to be cut into slices, and then drying the slices until achieving the desired weight reduction.

In the process of the present invention, the step of drying the slices comprises arranging the slices in a single layer on a permeable support surface and conveying the slices thus arranged along a path inside an enclosure, while first and second mutually parallel conditioned air currents, in opposite directions parallel to said support surface and transverse to the direction of travel of the conveyor device, are made to pass through two respective regions of said enclosure. The mentioned regions of the enclosure through which the first and second conditioned air currents pass are located in relation to the path of the slices inside the enclosure so that the slices receive the impingement of both first and second conditioned air currents while they are conveyed along the path. The slices are subjected to said first and second conditioned air currents for a period of 10 minutes to 70 minutes. The first conditioned air current is at a temperature of 15°C to 40°C and a relative humidity of 30% to 40%, and the second conditioned air current is in the same conditions as the first one or at a slightly lower temperature and at a slightly higher relative humidity.

The drying process described above can be carried out using the forced convection treatment unit of the present invention to subject the slices of the meat product to the action of the two conditioned air flows in opposite directions. The first conditioned air current will preferably have a speed of 2 m/s to 5 m/s and the second conditioned air current will have the same speed as the first one or a slightly lower speed. Once the drying process has finished, the slices are left to cool separated to prevent them from sticking to one another due to the particles of melted fat, and finally the process comprises forming groups of dried and cooled slices arranged in a desired format and packaging the groups of slices under vacuum or in a modified atmosphere using a thermoforming machine.

As may have been verified, the method of the present invention allows drastically reducing the preparation time of the meat product by several days, and furthermore provides a presentation of the finished product cut into slices and packaged suitable for being marketed in self-service establishments, and which is in ever greater demand among the public.

### Brief Description of the Drawings

The previous and other features and advantages will be more fully understood from the following detailed description of several embodiments with reference to the attached drawings, in which:
Figure 1 is a perspective view of a forced convection treatment unit for treating a meat product cut into slices according to a first embodiment of the present invention, in which a housing has been omitted for greater clarity of the drawing;
Figure 2 is a schematic cross-section view of the unit of Figure 1;
Figure 3 is a schematic cross-section view of a variant of the unit of Figure 1;
Figure 4 is a schematic cross-section view of a forced convection treatment unit for treating a meat product cut into slices according to a second embodiment of the present invention;
Figure 5 is a schematic upper view of the unit of Figure 4;
Figure 6 is a schematic upper view of a variant of the unit of Figure 4; and
Figure 7 is a schematic side view of a forced convection treatment line made up of two linked units, similar to the unit of the first embodiment shown in Figure 1.

### Detailed Description of Embodiments

In the description of the different embodiments and in the figures, the same numerical references refer to equal or equivalent features.

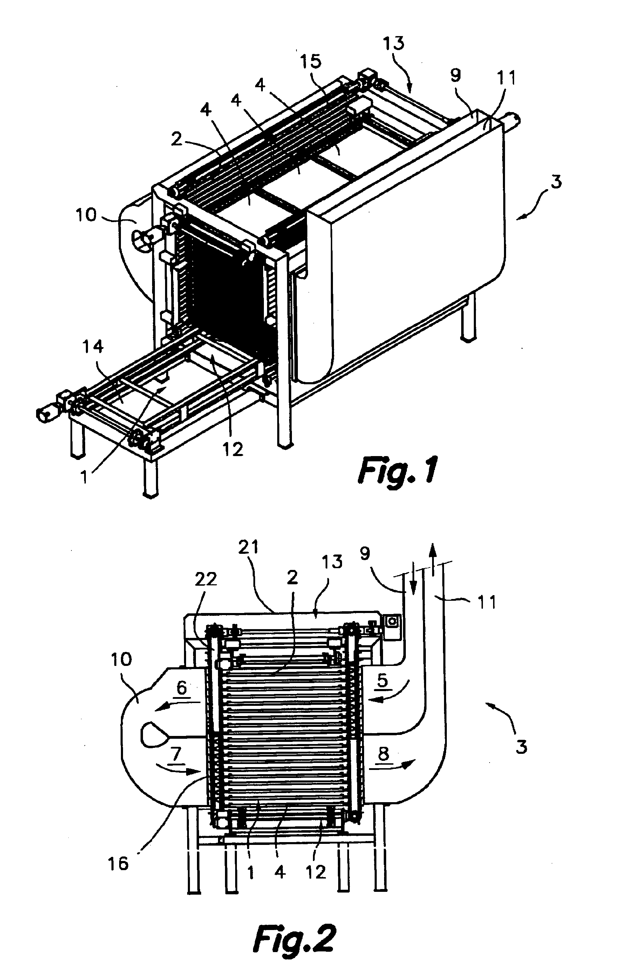

With reference first to Figures 1 and 2, they show a forced convection treatment unit according to a first embodiment of the present invention, which is useful for treating a meat product cut into slices, especially a sausage meat product cut into slices, although vegetable or fish products are not discounted. The unit comprises a housing 21 defining an enclosure 2 having at one end a reception opening 12 and at the other opposite end a delivery opening 13. The mentioned reception opening 12 is in a reception level close to the bottom of the enclosure, whereas the delivery opening 13 is in a delivery level close to the upper part of the enclosure. The housing 21 has been omitted in Figure 1 for a greater clarity of the drawing. The unit is associated to a conveyor device 1 configured to convey the slices of meat product along a path from the reception opening 12 to the delivery opening 13 inside said enclosure 2. The slices are conveyed individually separated, arranged in a single layer, on a permeable support surface. In the first embodiment shown in Figures 1 and 2, the conveyor device 1 is configured to convey a plurality of trays 4, each of which has a permeable support surface, along the width and length of which the slices are arranged.

The conveyor device 1 comprises a loading conveyor 14 for receiving the trays 4 and introducing them into the enclosure 2 through said reception opening 12, an unloading conveyor 15 for unloading the trays 4 from the enclosure 2 through said delivery opening 13 and a vertical conveyor 22 for vertically conveying the trays 4 between the reception level, where they are left by the loading conveyor 14, and the delivery level, from where they are taken by the unloading conveyor 15. In Figure 1, the trays follow an upward vertical path inside the enclosure 2. However, in an alternative embodiment, the reception level and the reception opening 12 are close to the upper part of the enclosure, the delivery level and the delivery opening 13 are close to the bottom of the enclosure and the vertical conveyor 22 is configured to vertically convey the trays 4 in a downward path. In the first embodiment shown in Figure 1, the loading conveyor 14 is configured to introduce groups of three trays 4 in the reception level, the vertical conveyor 22 is configured to vertically convey successive groups of three trays 4 between the reception and delivery levels forming a triple column of trays 4 inside the enclosure 2, and the unloading conveyor 15 is configured to extract groups of three trays 4 from the delivery level. Obviously, the unit could alternatively be built to handle individual trays or groups of another different number of trays.

The forced convection treatment unit also comprises an air circulation device 3 configured and arranged to make conditioned air pass through the inside of said enclosure 2 and around said slices while the trays 4 with the slices arranged thereon are conveyed by said conveyor device 1. As is better shown in the diagram of Figure 2, the mentioned air circulation device 3 comprises an inlet conduit 9 connected to a first inlet mouth 5 located on a first side of the enclosure 2 and in communication with the inside thereof. This first inlet mouth 5 directly faces a first outlet mouth 6 located on an opposite second side of the enclosure 2 and in communication with the inside thereof. On said second side of the enclosure 2 and in communication with the inside thereof there is a second inlet mouth 7, which is located adjacent and below said first outlet mouth 6. A deflector conduit 10 is connected at a first end to the first outlet mouth 6 and at a second end to the second inlet mouth 7. This second inlet mouth 7 directly faces a second outlet mouth 8 located on the first side of the enclosure 2 and in communication with the inside thereof, which is adjacent and below said first inlet mouth 5. An outlet conduit 11 is connected to said second outlet mouth 8.

The air circulation device 3 further includes at least one air moving device, such as a ventilator or a turbine (not shown) associated, for example, to said inlet conduit 9 to drive conditioned air inside it. The conditioned air is introduced into the enclosure 2 through the first inlet mouth 5 and is extracted through the first outlet mouth 6, such that between the first inlet and outlet mouths 5, 6 there is established a first conditioned air current inside the enclosure 2. The conditioned air extracted through the first outlet mouth 6 is led by said deflector conduit 10 towards the second inlet mouth 7, through which it is introduced again into the enclosure 2. The air introduced through the second inlet mouth 7 is extracted from the enclosure 2 through the second outlet mouth 8, such that between the second inlet and outlet mouths 7, 8 there is established a second conditioned air current inside the enclosure 2.

The inlet conduit 9 and the outlet conduit 11 are generally communicated to one another through an air conditioning unit (not shown), such that the air moving device provided to drive conditioned air in the inlet conduit 9 and through the first inlet mouth 5 also causes a suction effect in the outlet conduit 11 and through the second outlet mouth 8, and this favours the flow of the two currents in the enclosure 2. Alternatively, the air moving device, rather than being a driving device, could be arranged to suck conditioned air in the outlet conduit 11 and through the second outlet mouth 8, and this, if the inlet and outlet conduits 9, 11 are communicated through said air conditioning unit, would likewise cause a driving effect in the inlet conduit 9 and through the first inlet mouth 5. Optionally, the air circulation device 3 can include a second air moving device, such as a ventilator or turbine (not shown), arranged in the deflector conduit 10 to suck conditioned air through the first outlet mouth 6 and drive it through the second inlet mouth 7. It is also helpful that one or both of the first and second inlet mouths 5, 7 are equipped with a plurality of directing flanges 16 (Figure 2) to aid in directing the conditioned air current therethrough. Likewise, one or both of the first and second outlet mouths 6, 8 can be equipped with corresponding directing flanges.

The first and second inlet and outlet mouths 5, 6, 7, 8 are positioned in relation to the housing 21 and the conveyor device 1 such that said first and second conditioned air currents flow in mutually parallel opposite directions through two respective differentiated regions of the enclosure 2 traversed by the trays 4 in their path from the reception opening 12 to the delivery opening 13. Furthermore, the first and the second conditioned air currents are parallel to said permeable support surface of the trays 4 and transverse to the direction of travel of the conveyor device. The first inlet and outlet mouths 5, 6 are sized and arranged to make the first conditioned air current pass through a half of the path of the trays 4 inside the enclosure and the second inlet and outlet mouths 7, 8 are sized and arranged to make the second conditioned air current pass through another half of the path of the trays 4 inside the enclosure. The slices arranged on the trays 4 are thus subjected to the impingement of the conditioned air of both opposite first and second currents during their path between the reception and delivery openings 12, 13. A greater uniformity in the drying of the slices along the width of the trays is thereby achieved in comparison with a conventional forced convection treatment unit provided with a single conditioned air current.

Although Figure 2 shows by means of arrows the first conditioned air current from right to left through an upper region of the enclosure 2 and the second conditioned air current from left to right through a lower region of the enclosure 2, the directions and/or the positions of the first and second currents could be the reverse ones with an equivalent result. Inside the enclosure 2 there is no physical separation between the two regions through which the first and second conditioned air currents flow, such that both currents have respective surfaces in friction contact where turbulences are created that do not noticeably negatively affect the action of drying the slices.

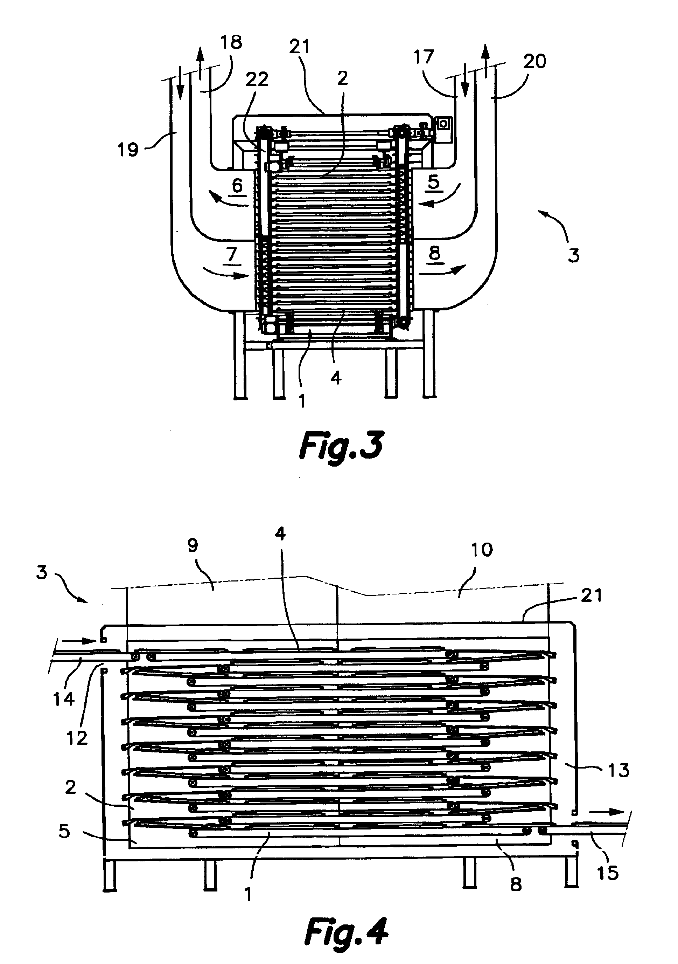

In relation to Figure 3, a variant of the first embodiment shown in Figures 1 and 2 is now described in which the housing 21, the enclosure 2, the conveyor device 1 and the arrangement of first and second inlet and outlet mouths 5, 6, 7, 8 in the housing 21 are the same as those described above in relation to Figures 1 and 2. The difference lies in the fact that, in the unit of Figure 3, the air circulation device 3 comprises a first inlet conduit 17 connected to the first inlet mouth 5 and a first outlet conduit 18 connected to the first outlet mouth 6, as well as a second inlet conduit 19 connected to the second inlet mouth 7 and a second outlet conduit 20 connected to the second outlet mouth 8. The flows of the first and second conditioned air currents are thus independent.

For example, the mentioned first inlet and outlet conduits 17, 18 can be communicated to one another through an air conditioning unit (not shown), and a first air moving device (not shown) can be arranged to drive conditioned air in the first inlet conduit 17 and through the first inlet mouth 5, which will cause at the same time a suction effect in the first outlet conduit 18 and through the first outlet mouth 6. Alternatively, this first air moving device can be provided to suck conditioned air in the first outlet conduit 18 and through the first outlet mouth 6, which will cause at the same time a driving effect in the first inlet conduit 17 and through the first inlet mouth 5. In a similar way, said second inlet and outlet conduits 19, 20 can be communicated to one another through the same air conditioning unit as the first circuit, or another. In any case, a second air moving device (not shown) can be arranged to drive conditioned air in the second inlet conduit 19 and through the second inlet mouth 7, which will cause at the same time a suction effect in the second outlet conduit 20 and through the second outlet mouth 8. Alternatively, this second air moving device can be arranged to suck conditioned air in the second outlet conduit 20 and through the second outlet mouth 8, which will cause at the same time a driving effect in the second inlet conduit 19 and through the second inlet mouth 7.

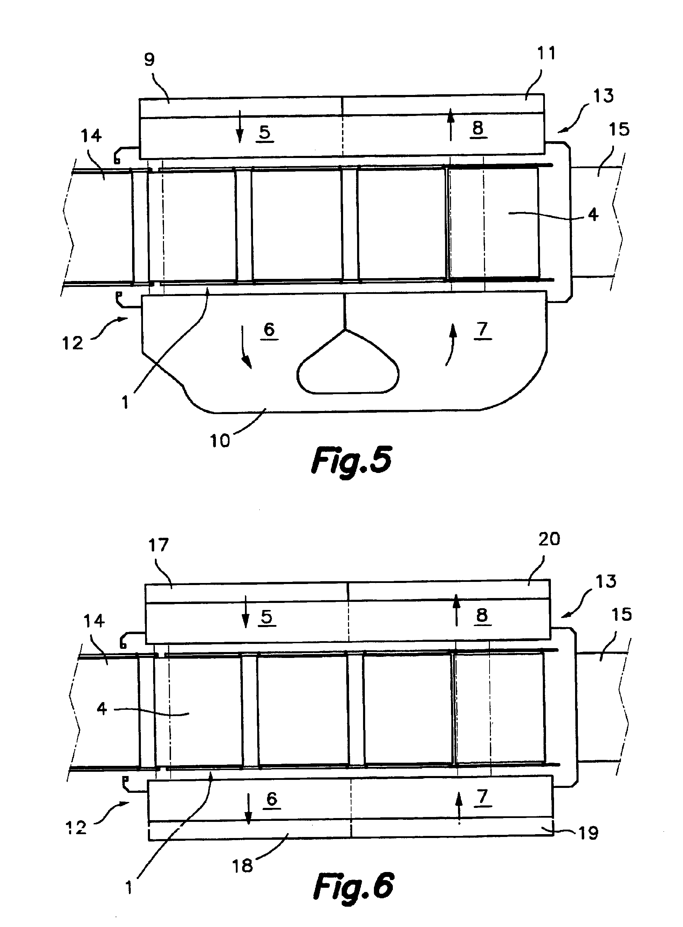

Figures 4 and 5 show a second embodiment of the forced convection treatment unit of the present invention, which comprises a housing or box 21 defining an enclosure 2 with a reception opening 12, located at a reception level close to the upper part of the housing 21, at a first end thereof, and a delivery opening 13, located at a delivery level close to the bottom of the housing 21, at an opposite second end thereof. The unit includes a conveyor device 1 comprising a plurality of superimposed sections configured to convey a plurality of trays 4 from said reception opening 12 to said delivery opening 13. To that end, the different sections of the conveyor device 1 are actuated in alternately opposite directions, and at the end of each section there is an arrangement of guides to guide the trays from the end of each section to the start of the immediately lower section, in a way known in itself. Each tray 4 has a permeable support surface, along the width and length of which the slices of the meat product to be dried are arranged. Alternatively, the sections of the conveyor device can be conveyor belts providing the permeable support surface, and the slices can be arranged directly on the conveyor belts, as described in the mentioned international patent application WO 2008135616. In any case, the slices are conveyed in a combined path in opposite horizontal directions and in a downward vertical direction from the reception opening 12 to the delivery opening 13.

In this second embodiment, the housing 21 has first inlet and outlet mouths 5, 6 in communication with the enclosure 2, and second inlet and outlet mouths 7, 8 in communication with the enclosure 2. The arrangement of said first and second inlet and outlet mouths 5, 6, 7, 8 is similar to that described in relation to the first embodiment, except that here the first inlet and outlet mouths 5, 6 are adjacent to and side to side with the second inlet and outlet mouths 7, 8, as shown in the diagram of Figure 5. An inlet conduit 9 is connected to the first inlet mouth 5, a deflector conduit 10 is connected to the first outlet mouth 6 at one end and the second inlet mouth 7 at the other end, and an outlet conduit 11 is connected to the second outlet mouth 8. At least one air moving device, such as a ventilator or a turbine (not shown) is associated, for example, to said inlet conduit 9 to drive conditioned air inside it or to said outlet conduit 11 to suck air inside it for the purpose of creating a first current from the first inlet mouth 5 to the first outlet mouth 6 and second current from the second inlet mouth 7 to the second outlet mouth 8. It will be observed that these first and second conditioned air currents flow in mutually parallel opposite directions through two respective regions of the enclosure 2 traversed by the trays 4 in accordance with the horizontal component of their path from the reception opening 12 to the delivery opening 13. It will furthermore be observed that the first and second conditioned air currents are parallel to the permeable support surface of the trays 4 or of the conveyor belts and transverse to the direction of travel of the conveyor device. Optionally, if necessary, a second air moving device can be arranged in the deflector conduit 10.

Figure 6 shows a variant of this second embodiment, in which the only difference is that a first inlet conduit 17 is connected to the first inlet mouth 5 and a first outlet conduit 18 is connected to the first outlet mouth 6, and in parallel a second inlet conduit 19 is connected to the second inlet mouth 7 and a second outlet conduit 20 is connected to the second outlet mouth 8. The flows of the first and second conditioned air currents are thus independent. This requires at least one first air moving device, such as a ventilator or a turbine (not shown), arranged to drive conditioned air inside the first inlet conduit 17 or suck air inside said first outlet conduit 18 for the purpose of creating the first current, and at least one second air moving device, such as a ventilator or turbine (not shown), arranged to drive conditioned air inside the second inlet conduit 19 or suck air inside the second outlet conduit 20 for the purpose of creating the second current.

It will be understood that in this second embodiment, and in accordance with the vertical component of the path of the slices inside the enclosure 2, the first inlet and outlet mouths 5, 6 could alternatively be arranged adjacent and above the second inlet and outlet mouths 7, 8 as in the unit of the first embodiment, with an equivalent result.

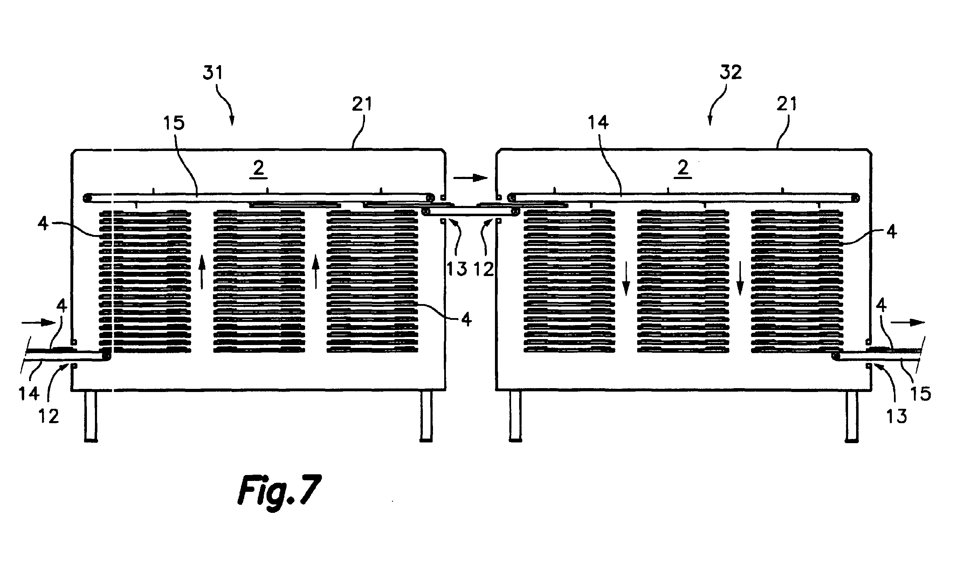

In relation to Figure 7, a forced convection treatment line is now described made up of two linked units 31, 32, each of which is similar to the forced convection treatment unit of the first embodiment shown in Figures 1 and 2. Here, a first unit 31 of the line has the loading inlet 12 next to the bottom of the enclosure 2 at a first end of the housing 21 and the unloading opening 13 next to the upper part of the enclosure 2 at an opposite second end of the housing 21. A second unit 32 of the line has the loading inlet 12 next to the upper part of the enclosure 2 at a first end of the housing 21 and the unloading opening 13 next to the bottom of the enclosure 2 at an opposite second end of the housing 21, such that the loading opening 12 of the second unit 32 directly faces the unloading opening 13 of the first unit 31. The trays which are extracted through the unloading opening 13 of the first unit 31 are thus immediately introduced through the loading opening 12 of the second unit 32. The treatment time is thereby prolonged without slowing down the travel rate of the trays along the line. In Figure 7, the arrows indicate the path of the trays 4 inside the enclosures 2. It will be understood that additional units could similarly be added to the drying line. It will also be understood that all the units 31, 32 of the line can have substantially the same construction and can be arranged in opposite positions and actuated to operate in reverse directions.

A process for preparing a sausage meat product, cut into slices, is known, in which the sausage meat product is relatively tender, or in other words, has a relatively low level of maturing or curing and a relatively high degree of moisture. This process comprises preparing a mass with one or more comminuted meat products, optionally with one or more condiments, and stuffing said mass in a casing to form sausage products. Then, the mass is allowed to ferment in the sausage products. Afterwards, the sausage products are cooled to a sufficiently low temperature (generally until freezing) to allow the cutting into slices without them breaking down and cutting the sausage products into slices. Finally, the slices are dried until achieving a predetermined weight reduction with respect to the weight of the recently cut slices, i.e., of the slices after the fermentation.

A second aspect of the present invention proposes carrying out the process by using a forced convection treatment unit according to any one of the possible embodiments of the first aspect of the present invention for the mentioned step of drying the slices. To that end, the slices are arranged in a single layer on a permeable support surface and conveyed thus arranged along a path inside an enclosure 2, and at the same time as at least first and second mutually parallel conditioned air currents are made to pass, in opposite directions parallel to said support surface and transverse to the direction of travel of the slices, through two respective regions of the enclosure 2 positioned in relation to said path such that the slices, during their movement inside the enclosure 2, they are affected by both first and second currents. The slices will be arranged individually separated along the length and width of said permeable support surface to facilitate the passage of the conditioned air currents therearound. Only with the mentioned forced conditioned air convection treatment for 10 minutes to 70 minutes, a weight reduction of 8% to 35% with respect to the weight of the recently cut slices, which is the suitable one for this type of relatively tender sausage products, can be achieved.

By way of example, the first conditioned air current can be at a temperature of 15°C to 40°C and a relative humidity of 30% to 40%, and can flow at a speed of 2 m/s to 5 m/s. The second conditioned air current can be in the same conditions as the first one if the flows of the two currents are independent (Figures 3 and 6), or at a slightly lower temperature, a slightly higher relative humidity and a slightly lower speed if one and the same flow provides the two currents with the aid of the deflector conduit 10 (Figures 2 and 5). After the step of drying, at the outlet of the forced convection treatment unit, or at the outlet of a forced convection treatment line formed by several units, the process comprises forming groups of dried slices arranged in a desired format and packaging the slices under vacuum or in a modified atmosphere.

An installation for carrying out the drying operations of the process will typically comprise one or more devices for cutting the previously cooled sausage products into slices, a device for arranging the slices in trays 4, one or more forced convection treatment lines, each of which is formed by one or more forced convection treatment units of the present invention, and one or more packaging units, all of them linked by suitable conveyor devices for conveying the trays 4 with the slices. The installation can include a return conveyor device for returning the empty trays again to the device for arranging the slices in trays passing through a tray cleaning device, and one or more temporary storage units, or "buffers", arranged in strategic places both of the loaded tray conveying line and of the empty tray conveying line.

A person skilled in the art will be able to carry out modifications and variations of the embodiments shown and described without departing from the scope of the present invention as it is defined in the attached claims.

## Claims

1. A forced convection treatment unit for treating a meat product cut into slices, of the type comprising:
a conveyor device (1) configured to convey slices of said meat product arranged in a single layer on a permeable support surface along a path inside an enclosure (2); and
an air circulation device (3) configured and arranged to make conditioned air pass through the inside of said enclosure (2) and around said slices while the slices are conveyed by said conveyor device (1) for sufficient time to reduce the moisture of the slices to a predetermined level,
**characterised in that** the air circulation device (3) comprises at least one air moving device associated to an arrangement of conduits (9, 10, 11) provided with a plurality of inlet and outlet mouths (5, 6, 7, 8) in communication with the inside of the enclosure (2) and arranged to make at least one first conditioned air current pass from a first side to an opposite second side of the enclosure (2) along a first portion of said path through the inside of the enclosure (2) and at least a second conditioned air current pass from said second side to said first side of the enclosure (2) along a second portion of the path through the inside of the enclosure (2), said first and second conditioned air currents flowing in mutually parallel opposite directions parallel to said support surface and transverse to the direction of travel of the conveyor device.

2. The unit according to claim 1, **characterised in that** said plurality of inlet and outlet mouths (5, 6, 7, 8) comprises:
a first inlet mouth (5) on a first side of the enclosure (2) and through which said first conditioned air current is introduced into the enclosure (2)
a first outlet mouth (6) on an opposite second side of the enclosure (2) and through which the first conditioned air current is extracted from the enclosure (2), said first outlet mouth (6) directly facing said first inlet mouth (5);
a second inlet mouth (7) on said second side of the enclosure (2) and through which said second conditioned air current is introduced into the enclosure (2), said second inlet mouth (7) being adjacent to the first outlet mouth (6); and
a second outlet mouth (8) on said first side of the enclosure (2) and through which the second conditioned air current is extracted from the enclosure (2), said second outlet mouth (8) directly facing said second inlet mouth (7) and being adjacent to the first inlet mouth (5).

3. The unit according to claim 2, **characterised in that** said arrangement of conduits (9, 10, 11) comprises an inlet conduit (9) connected to the first inlet mouth (5), a deflector conduit (10) connected at a first end to the first outlet mouth (6) and at a second end to the second inlet mouth (7), and an outlet conduit (11) connected to the second outlet mouth (8).

4. The unit according to claim 2, **characterised in that** said arrangement of conduits comprises a first inlet conduit (17) connected to the first inlet mouth (5), a first outlet conduit (18) connected to the first outlet mouth (6), a second inlet conduit (19) connected to the second inlet mouth (7), and a second outlet conduit (20) connected to the second outlet mouth (8).

5. The unit according to claim 3 or 4, **characterised in that** the conveyor device (I) is configured to convey a plurality of trays (4), each of which is provided with a horizontal permeable support surface on which the slices are arranged in a single layer, and to move said trays (4) within the enclosure (2) in a vertical direction from a reception level to a delivery level, and **in that** the first inlet mouth (5) and the first outlet mouth (6) are sized and arranged to make the first conditioned air current pass through a half of the path of the trays (4) between said reception level and said delivery level, and the second inlet mouth (7) and the second outlet mouth (8) are sized and arranged to make the second conditioned air current pass through another half of the path of the trays (4) between said reception level and said delivery level.

6. The unit according to claim 5, **characterised in that** the enclosure (2) has a reception opening (12) in the reception level and a delivery opening (13) in the delivery level, and the conveyor device (1) comprises a loading conveyor (14) for receiving trays (4) introduced through said reception opening (12), an unloading conveyor (15) for unloading trays (4) through said delivery opening (13) and a vertical conveyor (22) for vertically conveying the trays (4) between the loading conveyor and the unloading conveyor.

7. The unit according to claim 3, **characterised in that** said inlet conduit (9) and said outlet conduit (11) are communicated to one another through an air conditioning unit, and a first air moving device is arranged to drive conditioned air in the inlet conduit (9) and through the first inlet mouth (5), or to suck conditioned air in the outlet conduit (11) and through the second outlet mouth (8).

8. The unit according to claim 7, **characterised in that** a second air moving device is arranged in said deflector conduit (10) to suck conditioned air through the first outlet mouth (6) and drive conditioned air through the second inlet mouth (7).

9. The unit according to claim 4, **characterised in that** said first inlet conduit (17) and said first outlet conduit (18) are communicated to one another through an air conditioning unit, and a first air moving device is arranged to drive conditioned air in the first inlet conduit (17) and through the first inlet mouth (5) or to suck conditioned air in the first outlet conduit (18) and through the first outlet mouth (6), and said second inlet conduit (19) and said second outlet conduit (20) are communicated to one another through an air conditioning unit, and a second air moving device is arranged to drive conditioned air in the second inlet conduit (19) and through the second inlet mouth (7) or to suck conditioned air in the second outlet conduit (20) and through the second outlet mouth (8).

10. A process for preparing a meat product, of the type comprising the steps of:
preparing a mass with one or more comminuted meat products, optionally with one or more condiments, and stuffing said mass in a casing to form sausage products;
allowing the mass to ferment in the sausage products;
cooling the sausage products to a sufficiently low temperature to facilitate the cutting into slices;
cutting the sausage products into slices; and
drying the slices until achieving a predetermined weight reduction with respect to the weight of the recently cut slices,
**characterised in that** the step of drying the slices comprises:
arranging the slices in a single layer on a permeable support surface;
conveying the slices thus arranged along a path inside an enclosure (2); and
making at least one first conditioned air current pass from a first side to an opposite second side of the enclosure (2) along a first portion of said path through the inside of the enclosure (2) and a second conditioned air current pass from said second side to said first side of the enclosure (2) along a second portion of the path through the inside of the enclosure (2), such that the slices are affected by both first and second currents during their movement inside the enclosure (2), said first and second conditioned air currents flowing in mutually parallel opposite directions parallel to said support surface and transverse to the direction of travel of the slices.

11. The process according to claim 10, **characterised in that** the slices are arranged individually separated along the length and width of said permeable support surface and **in that** it comprises drying the slices until achieving a weight reduction of 8% to 35% with respect to the weight of the recently cut slices.

12. The process according to claim 10, **characterised in that** the step of drying has a duration of 10 minutes to 70 minutes.

13. The process according to claim 10, **characterised in that** said first conditioned air current is at a temperature of 15°C to 40°C and a relative humidity of 30% to 40% and said second conditioned air current is in the same conditions as the first one or at a slightly lower temperature and a slightly higher relative humidity.

14. The process according to claim 10, **characterised in that** the first conditioned air current has a speed of 2 m/s to 5 m/s and the second conditioned air current has the same speed as the first one or a slightly lower speed.

15. The process according to any one of claims 10 to 14, **characterised in that** after the step of drying, it comprises forming groups of dried slices arranged in a desired format, and packaging the slices under vacuum or in a modified atmosphere.

## Patentansprüche

1. Zwangskonvektionsgerät zur Behandlung eines in Scheiben geschnittenen Fleischprodukts, derart umfassend:
eine Fördervorrichtung (1), dazu ausgebildet, um Scheiben des genannten Fleischprodukts zu fördern, welches auf einer einzigen Schicht auf einer durchlässigen Stützfläche entlang eines Pfads innerhalb eines Gehäuses (2) angeordnet ist; und
eine Luftzirkulationsvorrichtung (3), welche dazu ausgebildet und angeordnet ist, um klimatisierte Luft durch das Innere des genannten Gehäuses (2) und um die genannten Scheiben herum zu führen, während die Scheiben von der genannten Fördervorrichtung (1) ausreichend lange gefördert werden, um die Feuchtigkeit der Scheiben auf ein vorbestimmtes Niveau zu verringern,
**dadurch gekennzeichnet, dass** die Luftzirkulationsvorrichtung (3) zumindest eine Luftbewegungsvorrichtung umfasst, die mit einer Anordnung von Leitungen (9, 10, 11) verbunden ist, die mit einer Vielzahl an Einlass- und Auslassöffnungen (5, 6, 7, 8) versehen sind, die in Verbindung mit dem Inneren des Gehäuses (2) stehen und derart angeordnet sind, um zumindest einen ersten klimatisierten Luftstrom von einer ersten Seite zu einer gegenüberliegenden zweiten Seite des Gehäuses (2) entlang eines ersten Teil des genannten Pfads durch das Innere des Gehäuses (2) zu führen, und zumindest einen zweiten klimatisierten Luftstrom von der genannten zweiten Seite zu der genannten ersten Seite des Gehäuses (2) entlang eines zweiten Teils des Pfads durch das Innere des Gehäuses (2) zu führen, wobei der genannte erste und zweite klimatisierte Luftstrom in zueinander parallelen entgegengesetzten Richtungen parallel zur genannten Stützfläche und quer zur Fahrrichtung der Fördervorrichtung fließen.

2. Gerät nach Anspruch 1, **dadurch gekennzeichnet, dass** die genannte Vielzahl an Einlass-und Auslassöffnungen (5, 6, 7, 8) Folgendes umfasst:
eine erste Einlassöffnung (5) auf einer ersten Seite des Gehäuses (2) und durch welche der genannte erste klimatisierte Luftstrom in das Gehäuse (2) eingeführt wird;
eine erste Auslassöffnung (6) auf einer gegenüberliegenden zweiten Seite des Gehäuses (2) und durch welche der erste klimatisierte Luftstrom aus dem Gehäuse (2) entnommen wird, wobei die genannte erste Auslassöffnung (6) der genannten ersten Einlassöffnung (5) direkt gegenüberliegt;
eine zweite Einlassöffnung (7) auf der genannten zweiten Seite des Gehäuses (2) und durch welche der genannte zweite klimatisierte Luftstrom in das Gehäuse (2) eingeführt wird, wobei die genannte zweite Einlassöffnung (7) an die erste Auslassöffnung (6) angrenzt; und
eine zweite Auslassöffnung (8) auf der genannten ersten Seite des Gehäuses (2) und durch welche der zweite klimatisierte Luftstrom aus dem Gehäuse (2) entnommen wird, wobei die genannte zweite Auslassöffnung (8) der genannten zweiten Einlassöffnung (7) direkt gegenüberliegt und an die erste Einlassöffnung (5) angrenzt.

3. Gerät nach Anspruch 2, **dadurch gekennzeichnet, dass** die genannte Anordnung an Leitungen (9, 10, 11) eine Einlassleitung (9), die mit der ersten Einlassöffnung (5) verbunden ist, eine Ablenkleitung (10), die an einem ersten Ende mit der ersten Auslassöffnung (6) und an einem zweiten Ende mit der zweiten Einlassöffnung (7) verbunden ist, und eine Auslassleitung (11), die mit der zweiten Auslassöffnung (8) verbunden ist, umfasst.

4. Gerät nach Anspruch 2, **dadurch gekennzeichnet, dass** die genannte Anordnung an Leitungen eine erste Einlassleitung (17), die mit der ersten Einlassöffnung (5) verbunden ist, eine erste Auslassleitung (18), die mit der ersten Auslassöffnung (6) verbunden ist, eine zweite Einlassleitung (19), die mit der zweiten Einlassöffnung (7) verbunden ist, und eine zweite Auslassleitung (20), welche mit der zweiten Auslassöffnung (8) verbunden ist, umfasst.

5. Gerät nach Anspruch 3 oder 4, **dadurch gekennzeichnet, dass** die Fördervorrichtung (1) dazu ausgebildet ist, um eine Vielzahl an Ablagen (4) zu fördern, von denen jede mit einer horizontalen, durchlässigen Stützfläche versehen ist, auf welcher die Scheiben in einer einzigen Schicht angeordnet sind, und um die genannten Ablagen (4) innerhalb des Gehäuses (2) in vertikaler Richtung von einer Aufnahmehöhe zu einer Auslieferungshöhe zu bewegen, und dass die erste Einlassöffnung (5) und die erste Auslassöffnung (6) eine derartige Größe und Anordnung aufweisen, um den ersten klimatisierten Luftstrom durch eine Hälfte des Pfads der Ablagen (4) zwischen der genannten Aufnahmehöhe und der genannten Auslieferungshöhe zu führen, und die zweite Einlassöffnung (7) und die zweite Auslassöffnung (8) eine derartige Größe und Anordnung aufweisen, um den zweiten klimatisierten Luftstrom durch eine andere Hälfte des Pfads der Ablagen (4) zwischen der genannten Aufnahmehöhe und der genannten Auslieferungshöhe zu führen.

6. Gerät nach Anspruch 5, **dadurch gekennzeichnet, dass** das Gehäuse (2) eine Aufnahmeöffnung (12) in der Aufnahmehöhe und eine Auslieferungsöffnung (13) in der Auslieferungshöhe aufweist, und die Fördervorrichtung (1) einen Ladeförderer (14) zur Aufnahme der durch die genannte Aufnahmeöffnung (12) eingeführten Ablagen (4), einen Entladeförderer (15) zum Entladen der Ablagen (4) durch die genannte Auslieferungsöffnung (13), und einen Vertikalförderer (22) zum vertikalen Fördern der Ablagen (4) zwischen dem Ladeförderer und dem Entladeförderer, umfasst.

7. Gerät nach Anspruch 3, **dadurch gekennzeichnet, dass** die genannte Einlassleitung (9) und die genannte Auslassleitung (11) miteinander durch ein Luftklimatisierungsgerät verbunden sind, und eine erste Luftbewegungsvorrichtung dazu angeordnet ist, um klimatisierte Luft in der Einlassleitung (9) und durch die erste Einlassöffnung (5) zu treiben, oder um klimatisierte Luft in der Auslassleitung (11) und durch die zweite Auslassöffnung (8) zu saugen.

8. Gerät nach Anspruch 7, **dadurch gekennzeichnet, dass** eine zweite Luftbewegungsvorrichtung in der genannten Ablenkleitung (10) dazu angeordnet ist, um klimatisierte Luft durch die erste Auslassöffnung (6) zu saugen und klimatisierte Luft durch die zweite Einlassöffnung (7) zu treiben.

9. Gerät nach Anspruch 4, **dadurch gekennzeichnet, dass** die genannte erste Einlassleitung (17) und die genannte erste Auslassleitung (18) miteinander durch ein Luftklimatisierungsgerät verbunden sind, und eine erste Luftbewegungsvorrichtung dazu angeordnet ist, um klimatisierte Luft in der ersten Einlassleitung (17) und durch die erste Einlassöffnung (5) zu treiben oder um klimatisierte Luft in der ersten Auslassleitung (18) und durch die erste Auslassöffnung (6) zu saugen, und die genannte zweite Einlassleitung (19) und die genannte zweite Auslassleitung (20) miteinander durch ein Luftklimatisierungsgerät verbunden sind, und eine zweite Luftbewegungsvorrichtung dazu angeordnet ist, um klimatisierte Luft in der zweiten Einlassleitung (19) und durch die zweite Einlassöffnung (7) zu treiben oder um klimatisierte Luft in der zweiten Auslassleitung (20) und durch die zweite Auslassöffnung (8) zu saugen.

10. Verfahren zur Zubereitung eines Fleischprodukts, derart umfassend folgende Schritte:
Zubereiten einer Masse mit einem oder mehreren zerkleinerten Fleischprodukten, wahlweise mit einem oder mehreren Gewürzen, und Stopfen der genannten Masse in eine Wursthülle, um Wurstprodukte zu formen;
Fermentieren lassen der Masse in den Wurstprodukten;
Abkühlen der Wurstprodukte auf eine ausreichend niedrige Temperatur, um das Scheiben schneiden zu erleichtern;
Schneiden der Wurstprodukte in Scheiben; und
Trocknen der Scheiben bis zum Erreichen einer vorbestimmten Gewichtsreduktion in Bezug auf das Gewicht der zuvor geschnittenen Scheiben,
**dadurch gekennzeichnet, dass** der Schritt des Trocknens der Scheiben Folgendes umfasst:
Anordnen der Scheiben in einer einzigen Schicht auf einer durchlässigen Stützfläche;
Fördern der derart angeordneten Scheiben entlang eines Pfads innerhalb eines Gehäuses (2); und
Führen zumindest eines ersten klimatisierten Luftstroms von einer ersten Seite zu einer gegenüberliegenden zweiten Seite des Gehäuses (2) entlang eines ersten Teils des genannten Pfads durch das Innere des Gehäuses (2), und Führen eines zweiten klimatisierten Luftstroms von der genannten zweiten Seite zu der genannten ersten Seite des Gehäuses (2) entlang eines zweiten Teils des Pfads durch das Innere des Gehäuses (2), so dass sowohl der erste als auch der zweite Strom während ihrer Bewegung innerhalb des Gehäuses (2) auf die Scheiben wirken, wobei der genannte erste und zweite klimatisierte Luftstrom in zueinander parallelen, gegenüberliegenden Richtungen, parallel zur genannten Stützfläche und quer zur Fahrrichtung der Scheiben, fließen.

11. Verfahren nach Anspruch 10, **dadurch gekennzeichnet, dass** die Scheiben individuell getrennt entlang der Länge und Breite der genannten durchlässigen Stützfläche angeordnet sind, und dass es das Trocknen der Scheiben bis zum Erreichen einer Gewichtsreduktion von 8% bis 35% in Bezug auf das Gewicht der zuvor geschnittenen Scheiben umfasst.

12. Verfahren nach Anspruch 10, **dadurch gekennzeichnet, dass** der Schritt des Trocknens eine Dauer von 10 Minuten bis 70 Minuten hat.

13. Verfahren nach Anspruch 10, **dadurch gekennzeichnet, dass** der genannte erste klimatisierte Luftstrom eine Temperatur von 15°C bis 40°C und eine relative Feuchtigkeit von 30% bis 40% hat, und der genannte zweite klimatisierte Luftstrom dieselben Bedingungen wie der Erste oder eine leicht niedrigere Temperatur und eine leicht höhere relative Feuchtigkeit hat.

14. Verfahren nach Anspruch 10, **dadurch gekennzeichnet, dass** der erste klimatisierte Luftstrom eine Geschwindigkeit von 2 m/s bis 5 m/s und der zweite klimatisierte Luftstrom dieselbe Geschwindigkeit wie der Erste oder eine leicht niedrigere Geschwindigkeit hat.

15. Verfahren nach einem der Ansprüche 10 bis 14, **dadurch gekennzeichnet, dass** es nach dem Schritt des Trocknens die Bildung von Gruppen von getrockneten Scheiben, die in einem gewünschten Format angeordnet sind, und das Verpacken der Scheiben unter Vakuum oder in einer abgeänderten Atmosphäre, umfasst.

## Revendications

1. Une unité de traitement par convection forcée pour traiter un morceau de viande coupé en tranches, du genre comportant:
un dispositif convoyeur (1) configuré pour transporter des tranches de cette viande aménagé en une seule couche sur une surface de support perméable le long d'un passage à l'intérieur d'un espace clos (2); et
un dispositif pour circulation d'air (3) configuré et agencé pour faire passer l'air conditionné à travers l'intérieur de cet espace clos (2) et autour de ces tranches pendant que ces tranches sont transportées par ce dispositif convoyeur (1) durant un temps suffisant pour réduire l'humidité des tranches à un niveau prédéterminé,
**caractérisé en ce que** le dispositif de circulation d'air (3) comporte au moins un dispositif pour déplacer l'air relié à un agencement de conduits (9, 10, 11) muni d'une pluralité de bouches d'entrée et de sortie (5,6,7,8) en communication avec l'intérieur de l'espace clos (2) et aménagés pour faire passer au moins un premier courant d'air conditionné d'un premier côté à un deuxième côté opposé de l'espace clos (2) le long d'une première portion de ce passage à travers l'intérieur de l'espace clos (2) et faire passer au moins un deuxième courant d'air conditionné de ce deuxième côté à ce premier côté de l'espace clos (2) le long d'une deuxième portion du passage à travers l'intérieur de l'espace clos (2), ces premier et deuxième courants d'air conditionné s'écoulant dans des sens opposés parallèles entre eux vers cette surface de support et transversalement au sens de déplacement du dispositif convoyeur.

2. L'unité conformément à la revendication 1, **caractérisée en ce que** cette pluralité de bouches d'entrée et de sortie (5, 6, 7,8) comporte :
une première bouche d'entrée (5) sur un premier côté de l'espace clos (2) et à travers laquelle ce premier courant d'air conditionné est introduit dans cet espace clos (2)
une première bouche de sortie (6) sur un deuxième côté opposé de l'espace clos (2) et à travers laquelle le premier courant d'air conditionné est extrait de l'espace clos (2), cette première bouche de sortie (6) faisant directement face à cette première bouche d'entrée (5);
une deuxième bouche d'entrée (7) sur ce deuxième côté de l'espace clos (2) et à travers laquelle ce deuxième courant d'air conditionné est introduit dans l'espace clos (2), cette deuxième bouche d'entrée (7) étant adjacente à la première bouche de sortie (6); et
une deuxième bouche de sortie (8) sur ce premier côté de l'espace clos (2) et à travers laquelle le deuxième courant d'air conditionné est extrait de l'espace clos (2), cette deuxième bouche de sortie (8) faisant directement face à cette deuxième bouche d'entrée (7) et étant adjacente à la première bouche d'entrée (5).

3. L'unité conformément à la revendication 2, **caractérisée en ce que** cet agencement de conduits (9, 10, 11) comporte un conduit d'entrée (9) relié à la première bouche d'entrée (5), un conduit déflecteur (10) relié à une première extrémité de la première boche de sortie (6) et à une deuxième extrémité à la deuxième bouche d'entrée (7) et un conduit de sortie (11) relié à la deuxième bouche de sortie (8).

4. L'unité conformément à la revendication 1, **caractérisée en ce que** cet agencement de conduits comporte une premier conduit d'entrée (17) relié à la première bouche d'entrée (5), un premier conduit de sortie (18) relié à la première bouche de sortie (6), un deuxième conduit d'entrée (19) relié à la deuxième bouche d'entrée (7), et un deuxième conduit de sortie (20) relié à la deuxième bouche de sortie (8).

5. L'unité conformément à la revendication 3 ou 4, **caractérisée en ce que** le dispositif convoyeur (1) est configuré pour transporter une pluralité de plateaux (4) chacun étant muni d'une surface de support perméable horizontale sur laquelle les tranches sont aménagées en une seule couche et pour déplacer ces plateaux (4) à l'intérieur de l'espace clos (2) en un sens vertical du niveau de réception à un niveau de livraison et **en ce que** la première bouche d'entrée (5) et la première bouche de sortie (6) ont une taille et sont aménagées de sorte à faire passer le premier courant d'air conditionné à travers une moitié du passage des plateaux (4) entre ce niveau de réception et ce niveau de livraison et la deuxième bouche d'entrée (7) et la deuxième bouche de sortie (8) ont une taille et sont aménagées de sorte que le deuxième courant d'air conditionné passe à travers une autre moitié du passage des plateaux (4) entre ce niveau de réception et ce niveau de livraison.

6. L'unité conformément à la revendication 5, **caractérisée en ce que** l'espace clos (2) possède une ouverture de réception (12) au niveau de réception et une ouverture de livraison (13) au niveau de livraison et le dispositif convoyeur (1) comporte une convoyeur de chargement (14) pour recevoir les plateaux (4) introduits à travers cette ouverture de réception (12), un convoyeur de déchargement (15) pour décharger les plateaux (4) à travers cette ouverture de livraison (13) et un convoyeur vertical (22) pour transporter verticalement les plateaux (4) entre le convoyeur de chargement et le convoyeur de déchargement.

7. L'unité conformément à la revendication 3, **caractérisée en ce que** ce conduit d'entrée (9) et ce conduit de sortie (11) sont communiqués entre eux à travers une unité d'air conditionné, et un premier dispositif de déplacement d'air est aménagé pour conduire l'air conditionné dans le conduit d'entrée (9) et à travers la première bouche d'entrée (5) ou pour aspirer l'air conditionné dans le conduit de sortie (11) et à travers la deuxième bouche de sortie (8).

8. L'unité conformément à la revendication 7, **caractérisée en ce que** le deuxième dispositif de déplacement d'air est aménagé dans ce conduit déflecteur (10) pour aspirer l'air conditionné à travers la première bouche de sortie (6) et conduire l'air conditionné à travers la deuxième bouche d'entrée (7).

9. L'unité conformément à la revendication 4, **caractérisée en ce que** ce premier conduit d'entrée (17) et ce premier conduit de sortie (18) sont communiqués entre eux à travers une unité d'air conditionné et un premier dispositif de déplacement d'air est aménagé pour conduire l'air conditionné dans un premier conduit d'entrée (17) et à travers la première bouche d'entrée (5) ou aspirer l'air conditionné dans le premier conduit de sortie (18) et à travers la première bouche de sortie (6) et ce deuxième conduit d'entrée (19) et ce deuxième conduit de sortie (20) sont communiqués entre eux à travers une unité d'air conditionné et un deuxième dispositif de déplacement d'air est aménagé pour conduire l'air conditionné dans le deuxième conduit d'entrée (19) et à travers la deuxième bouche d'entrée (7) ou pour aspirer l'air conditionné dans le deuxième conduit de sortie (20) et à travers la deuxième bouche de sortie (8).

10. Une méthode pour préparer un morceau de viande du genre comportant les étapes de:
préparer une masse avec un ou plusieurs morceaux de viande hachée, optionnellement avec un ou plusieurs condiments et bourrer cette masse dans une enveloppe pour former des saucisses;
permettre à la masse de fermenter dans la saucisse;
refroidir les saucisses à une température suffisamment basse pour que cela soit facile de les couper en tranches;
couper les saucisses en tranches; et
sécher les tranches jusqu'à obtenir une réduction prédéterminée du poids par rapport au poids des tranches récemment coupées,
**caractérisée en ce que** l'étape de sécher les tranches comporte:
aménager les tranches en une seule couche sur une surface de support perméable;
transporter les tranches ainsi aménagées le long d'un passage à l'intérieur d'un espace clos (2); et
faire passer au moins un premier courant d'air conditionné d'un premier côté à un deuxième côté opposé de l'espace clos (2) le long d'une première portion de ce passage à travers l'intérieur de l'espace clos (2) et qu'un deuxième courant d'air conditionné passe de ce deuxième côté à ce premier côté de l'espace clos (2) le long d'une deuxième portion du passage à travers l'intérieur de l'espace clos (2), de sorte que les tranches soient affectées par les deux courants, le premier et le deuxième, durant leur déplacement à l'intérieur de l'espace clos (2), ces premier et deuxième courants d'air conditionné s'écoulant en des sens opposés mutuellement parallèles, parallèlement à cette surface de support et transversalement au sens du déplacement des tranches.

11. La méthode conformément à la revendication 10, **caractérisée en ce que** les tranches sont aménagées individuellement écartées tout le long et large de cette surface de support perméable et **en ce qu'**elle comporte le séchage des tranches jusqu'à obtenir une réduction du poids de 8% à 35% par rapport au poids des tranches récemment coupées.

12. La méthode conformément à la revendication 10, **caractérisée en ce que** l'étape de séchage a une durée de 10 à 70 minutes.

13. La méthode conformément à la revendication 10, **caractérisée en ce que** ce premier courant d'air conditionné est à une température de 15°C à 40°C et une humidité relative de 30% à 40% et ce deuxième courant d'air conditionné est dans les mêmes conditions que le premier ou a une température légèrement plus basse et une humidité relative légèrement plus élevée.

14. La méthode conformément à la revendication 10, **caractérisée en ce que** le premier courant d'air conditionné a une vitesse de 2 m/s à 5 m/s et le deuxième courant d'air conditionné a la même vitesse que le premier ou une vitesse légèrement plus faible.

15. La méthode conformément à une quelconque des revendications 10 à 14, **caractérisée en ce qu'**après l'étape de séchage, elle comporte former des groupes de tranches séchées aménagées ayant un format souhaité et d'emballer les tranches à vide ou dans une atmosphère modifiée.
